# EUROPÄISCHE PATENTSCHRIFT

(11) **EP 2 624 701 B1**
(45) Veröffentlichungstag und Bekanntmachung des Hinweises auf die Patenterteilung: **19.10.2016**
(21) Anmeldenummer: 11770996.4
(22) Anmeldetag: 03.10.2011
(51) Int. Cl.: A01N 59/00, A01P 1/00, C02F 1/68, C02F 1/76, C02F 1/461, C02F 1/467, C02F 103/02, C02F 103/42, C02F 103/44

(54) **VERFAHREN ZUR HERSTELLUNG VON ELEKTROAKTIVIERTEM WASSER DURCH ELEKTROLYSE EINER WÄSSRIGEN NATRIUMCHLORID-LÖSUNG**
METHOD FOR THE PREPARATION OF ELECTROACTIVATED WATER BY ELECTROLYSIS OF AN AQUEOUS SODIUM CHLORIDE SOLUTION
PROCÉDÉ POUR LA PREPARATION DE L'EAU ÉLECTROACTIVÉE PAR L'ÉLECTROLYSE D'UN SOLUTION AQUEUSE DE CHLORURE DE SODIUM

(30) Priorität: 04.10.2010 CH 16142010
(43) Veröffentlichungstag der Anmeldung: 14.08.2013
(73) Patentinhaber: Meier, René, 6318 Walchwil (CH)
(72) Erfinder: Meier, René, 6318 Walchwil (CH)
(74) Vertreter: Zink-Wild, Markus Peter
(86) Internationale Anmeldenummer: PCT/CH2011/000233
(87) Internationale Veröffentlichungsnummer: WO 2012/051728

(56) Entgegenhaltungen:
- EP-A2- 2 058 282
- WO-A1-01/54704
- WO-A1-2006/082561
- WO-A1-2010/020270
- DE-A1- 19 717 579
- DE-A1-102005 012 907
- DE-T2- 60 219 323
- DE-T2- 69 434 773
- Aquarotter - Franke: "Trinkwasserhygiene Desinfektion", , 1. August 2006 (2006-08-01), Seiten 1-47, XP55014170, Gefunden im Internet: URL:http://www.r-strauss.de/Formulare/Aqua Rotter/Armaturentechnik_Katalog_2006/Einze lkapitel/07_Trinkwasserhygiene_Desinfektio n/07_Trinkwasserhygiene_Desinfektion_kompl ett.pdf [gefunden am 2011-12-07]
- A Chrétien ET AL: "Carbonate Monosodique ou Carbonate Acide de Sodium" In: "Nouveau Traité de Chimie Minérale", 1. Januar 1966 (1966-01-01), Editeurs Masson et Cie, Paris, XP55014128, Seiten 906-911, Seiten 910, 911
- Nils Wiberg ET AL: "2.2.2 Natriumhydroxid" In: "Lehrbuch der Anorganischen Chemie", 1. Januar 1985 (1985-01-01), Walter de Gruyter, Berlin, New York, XP55014126, ISBN: 978-3-11-007511-3 Seiten 938-939, Seite 939
- Nils Wiberg ET AL: "1.2 Das Chlor" In: "Lehrbuch der Anorganischen Chemie", 1. Januar 1985 (1985-01-01), Walter de Gruyter, Berlin, New York, XP55014131, ISBN: 978-3-11-007511-3 Seiten 390-394, Seiten 391, 394
- DATABASE WPI Week 200060 Thomson Scientific, London, GB; AN 2000-620826 XP002665407, & JP 2000 178197 A (TOTO LTD) 27. Juni 2000 (2000-06-27)
- MOHAMMED AIDER ET AL: "Electro-activated aqueous solutions: Theory and application in the food industry and biotechnology", INNOVATIVE FOOD SCIENCE AND EMERGING TECHNOLOGIES, ELSEVIER, AMSTERDAM, NL, vol. 15, 3 February 2012 (2012-02-03), pages 38-49, XP028513941, ISSN: 1466-8564, DOI: 10.1016/J.IFSET.2012.02.002 [retrieved on 2012-02-10]
- GARETH ROBINSON ET AL: 'The Effect of Long-Term Storage on the Physiochemical and Bactericidal Properties of Electrochemically Activated Solutions' INTERNATIONAL JOURNAL OF MOLECULAR SCIENCES Bd. 14, Nr. 1, 24 Dezember 2012, Seiten 457 - 469, XP055194201 DOI: 10.3390/ijms14010457
- CUI X ET AL: "Physicochemical properties and bactericidal efficiency of neutral and acidic electrolyzed water under different storage conditions", JOURNAL OF FOOD ENGINEERING, BARKING, ESSEX, GB, vol. 91, no. 4, 1 April 2009 (2009-04-01), pages 582-586, XP025868222, ISSN: 0260-8774, DOI: 10.1016/J.JFOODENG.2008.10.006 [retrieved on 2008-10-18]
- SOO-VOON LEN ET AL: "Effects of Storage Conditions and pH on Chlorine Loss in Electrolyzed Oxidizing (EO) Water", JOURNAL OF AGRICULTURAL AND FOOD CHEMISTRY, AMERICAN CHEMICAL SOCIETY, US, vol. 50, 1 January 2002 (2002-01-01), pages 209-212, XP007909165, ISSN: 0021-8561, DOI: 10.1021/JF010822V
- G.M. ROBINSON ET AL: 'Evaluation of the efficacy of electrochemically activated solutions against nosocomial pathogens and bacterial endospores' LETTERS IN APPLIED MICROBIOLOGY Bd. 50, Nr. 3, 01 März 2010, Seiten 289 - 294, XP055194294 DOI: 10.1111/j.1472-765X.2009.02790.x ISSN: 0266-8254
- L A NOVIKOVA ET AL: 'THE INCREASE OF EFFICIENCY OF TREATMENT OF THE INFECTIOUS ECZEMA ON THE BASIS OF APPLICATION OF THE ELECTROACTIVATED WATER SOLUTIONS' BULLETIN OF NEW MEDICAL TECHNOLOGIES Bd. XVII, Nr. 2, 01 Februar 2010, Seiten 269 - 271, XP055194352

## Beschreibung

Die vorliegende Erfindung betrifft ein Verfahren zur Herstellung von elektroaktiviertem Wasser, welches in einem geschlossenen Behältnis 9 bei einer Lagertemperatur von 15°C bis 25°C während wenigstens 3 Monaten eine keimreduzierende, keimabtötende Wirkung aufweist.

Zur Bekämpfung von *Legionellen* in Warmwasser sind die folgenden Behandlungsmethoden bekannt:
1. Thermische Behandlung:
   - Konstante hohe Temperatur des Warmwassers von etwa 70°C;
   - Periodisches, tägliches Hochfahren der Temperatur des Warmwassers, beispielsweise eine Erwärmung des Wassers auf mehr als 70°C während 1 bis 3 Stunden.

   Diese beiden thermischen Behandlungen haben den Nachteil, dass viel Energie zur Erwärmung des Wassers benötigt wird. Das aus der Leitung fliessende Warmwasser muss in der Regel für die Anwendung wieder mit Kaltwasser vermischt werden, um eine übliche Gebrauchstemperatur von etwa 40°C bis etwa 50°C zu haben.
2. Chemische Behandlung:
   Das Warmwasser kann frei von *Legionellen* gehalten werden, indem dem Warmwasser vor Ort hergestelltes Chlordioxid zugegeben wird.

   Es ist auch möglich, bei einem Befall des Warmwasser-Systems mit *Legionellen* das Warmwasser-System mit Chlor zu spülen.
   Die erste chemische Behandlung hat den Nachteil, dass die Chemikalien zur Herstellung von Chlordioxid, nämlich Natriumchlorit und Salzsäure, gefährliche Stoffe sind, welche gemäss speziellen Vorschriften transportiert und gelagert werden müssen.
   Die zweite chemische Behandlung hat den Nachteil, dass das Warmwasser während der Behandlung des Warmwasser-Systems nicht zur Verfügung steht. Das mit Chlor behandelte Warmwasser-System muss nachträglich mit Frischwasser gespült werden.
3. Behandlung mit UV-Strahlen:
   Das Warmwasser kann frei von *Legionellen* gehalten werden, indem das Warmwasser vor Ort mit UV-Licht bestrahlt wird.

Dieses Verfahren hat den Nachteil, dass bei stark schwankendem Wasserverbrauch die Bestrahlungsanlage nicht optimal dimensioniert und betrieben werden kann.

Dieses Verfahren hat den weiteren Nachteil, dass im behandelten Wasser in unkontrollierter Weise wieder neue Keime wachsen können.

Es ist ein Ziel der vorliegenden Erfindung, die oben genannten Nachteile zu überwinden.

Es ist ein weiteres Ziel der vorliegenden Erfindung, ein industriell anwendbares Verfahren zur Herstellung von elektroaktiviertem Wasser, welches in einem geschlossenen Behältnis 9 bei einer Lagertemperatur von 15°C bis 25°C während wenigstens 3 Monaten eine keimreduzierende, keimabtötende Wirkung aufweist, zur Verfügung zu stellen.

Dieses Verfahren soll einfach sein und keine gefährlichen Stoffe benötigen.

Das mit diesem Verfahren hergestellte Produkt soll bei einer Lagertemperatur von 15°C bis 25°C während wenigstens 3 Monaten ohne merklichen Verlust der keimreduzierenden, keimabtötenden Wirkung in einem geschlossenen Behältnis lagerbar sein.

Dieses Verfahren soll aber auch direkt vor Ort durchführbar sein, so dass das hergestellte Produkt, also das elektroaktivierte Wasser, direkt verwendet werden kann.

Mit der vorliegenden Erfindung werden diese Ziele erreicht.

Die vorliegende Erfindung beschreibt ein Verfahren zur Herstellung von elektroaktiviertem Wasser, welches in einem geschlossenen Behältnis 9 bei einer Lagertemperatur von 15°C bis 25°C während wenigstens 3 Monaten eine keimreduzierende, keimabtötende Wirkung aufweist,
dadurch gekennzeichnet, dass man
Wasser in einem geschlossenen Kreislauf 7 mehrmals durch eine Ionisations-Vorrichtung 2 pumpt,
wobei dem Kreislauf-Wasser in beliebiger Reihenfolge eine Natriumchlorid-Lösung und gasförmiges Kohlenstoffdioxid zudosiert werden,
wobei eine Kontroll- und Steuerungs-Einheit 3
- die Stromstärke und
- die Spannung
   in der genannten Ionisations-Vorrichtung 2
   sowie
- die Durchflussgeschwindigkeit und
- die Zugabe der Menge der Natriumchlorid-Lösung und der Menge des gasförmigen Kohlenstoffdioxids
bezüglich vorbestimmter Werte kontrolliert und steuert, und dass man anschliessend
das so erhaltene Produkt, also das elektroaktivierte Wasser, entweder in ein Behältnis 9 abfüllt und verschliesst oder direkt verwendet.

Bevorzugte Ausführungsformen der vorliegenden Erfindung sind in den abhängigen Ansprüchen definiert.

Im folgenden Teil werden mögliche Ausführungsformen der vorliegenden Erfindung beschrieben.

Dabei wird auch Bezug auf die einzige Figur genommen.

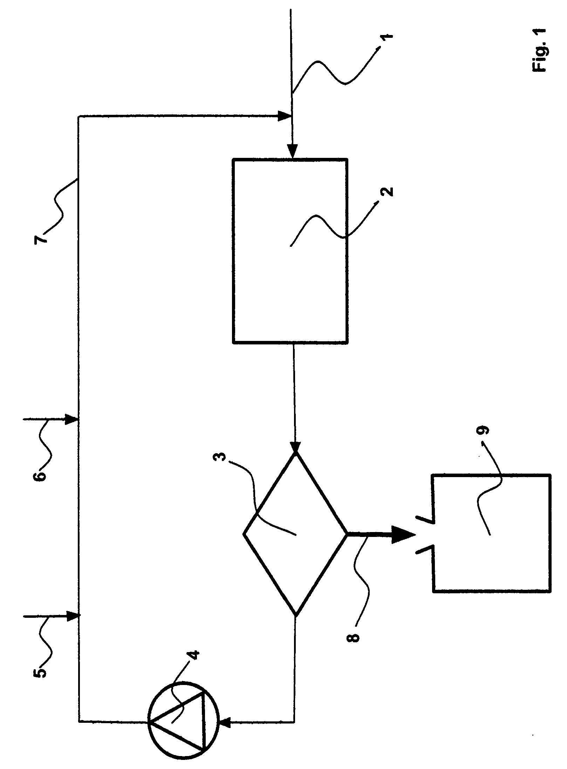

Figur 1 zeigt rein schematisch ein mögliches Prozess-Schema.

Beim erfindungsgemässen Verfahren hat das Wasser im geschlossenen Kreislauf 7 in der Regel eine Temperatur von 15°C bis 60°C, insbesondere von 25°C bis 40°C, vorzugsweise Raumtemperatur.

Dabei kann das Wasser vor der Einspeisung in den Kreislauf 7 auf die gewünschte Temperatur erwärmt werden. Es ist auch möglich, das Kreislauf-Wasser im Kreislauf 7 auf die gewünschte Temperatur zu erwärmen.

Das erfindungsgemässe Verfahren kann auch unter Überdruck ausgeführt werden, beispielsweise bei einem Überdruck von 0,5 bar bis zu einem Maximum von 8 bar. In diesem Fall müssen alle System-Komponenten für den entsprechenden Betriebsdruck ausgelegt sein.

Es ist jedoch bevorzugt, das erfindungsgemässe Verfahren bei atmosphärischem Druck auszuführen.

Beim erfindungsgemässen Verfahren richtet sich die erforderliche Qualität des als Ausgangsmaterial verwendeten Wassers nach der Endverwendung des erfindungsgemäss hergestellten Produktes.

Für die Behandlung von Warmwasser-Systemen muss das als Ausgangsmaterial verwendete Wasser mindestens Trinkwasserqualität haben.

Wenn das gemäss dem erfindungsgemässen Verfahren hergestellte elektroaktivierte Wasser
- als Agens zur Entkeimung von Prozesswasser, oder
- als Agens zur Entkeimung von Wasser für Schwimmbäder, oder
- als Agens zur Desinfektion von Oberflächen, beispielsweise von Nasszellen, wie Douchen oder Umgebungen von Hallenbädern, oder
- als Agens zur Entkeimung von Kühltürmen, insbesondere Kühltürme mit einem offenen Kreislauf, oder
- als Agens zur Entkeimung von wasserlöslichen Farben, oder
- als Agens zur Entkeimung von sanitären Anlagen, beispielsweise Lavabos, Badewannen, Toiletten, oder
- als Agens zur Entkeimung von Waschanlagen, beispielsweise Waschanlagen zum Waschen und Reinigen von Wäsche, Geschirr oder Fahrzeugen
verwendet wird, dann kann das als Ausgangsmaterial verwendete Wasser Trinkwasserqualität aufweisen. Es kann aber auch gewöhnliches Brauchwasser verwendet werden.

Für die Behandlung von Wasser in Schwimmbädern kann das als Ausgangsmaterial verwendete Wasser auch gebrauchtes Badewasser sein.

Wenn das gemäss dem erfindungsgemässen Verfahren hergestellte elektroaktivierte Wasser als aktive Wirkstoffkomponente in einem dermatologischen Präparat, beispielsweise ein Präparat zur Behandlung von Mauke, verwendet wird, dann muss das als Ausgangsmaterial verwendete Wasser die verlangten Qualitätsanforderungen erfüllen.

Als Ionisations-Vorrichtung 2 wird vorzugsweise ein Flachreaktor mit herkömmlichem Aufbau verwendet.

Es ist bevorzugt, dass in dieser Ionisations-Vorrichtung 2
- die Stromstärke von 1 bis 12 Ampere,
- die Spannung von 5 bis 50 Volt DC, und
- die Durchflussgeschwindigkeit von 100 bis 1'000 Liter/Stunde
betragen.

Die Kontroll- und Steuerungs-Einheit 3 kontrolliert und steuert bezüglich vorbestimmter Werte
- die Stromstärke und
- die Spannung
   in der Ionisations-Vorrichtung 2
   sowie
- die Durchflussgeschwindigkeit und
- die Zugabe der Menge der Natriumchlorid-Lösung und der Menge des gasförmigen Kohlenstoffdioxids.

### Die oben genannten "vorbestimmten Werte" werden gemäss den an das Endprodukt gestellten Qualitätsanforderungen definiert.

### Dabei wird wie folgt vorgegangen:

Im erfindungsgemäss hergestellten Endprodukt, also dem elektroaktivierten Wasser, hat der pH vorzugsweise einen Wert von kleiner als 7, insbesondere einen Wert von 6,5 bis 3.

Im Endprodukt, also dem elektroaktivierten Wasser, hat der Chlorid-Wert insbesondere einen Wert von 200 mg/l bis 20'000 mg/l, vorzugsweise von 1'000 mg/l bis 2'000 mg/l.

Zur Bekämpfung von *Legionellen* und/oder *Pseudomonas* in Warmwasser hat das erfindungsgemässe elektroaktivierte Wasser vorzugsweise einen gesamten ChlorGehalt von maximal 60 mg/l, vorzugsweise von 20 mg/l bis 40 mg/l.

Zur Bekämpfung von *Legionellen* und/oder *Pseudomonas* und/oder weiteren keimbildenden Einheiten (KBE) in Wasser in Schwimmbädern kann das erfindungsgemässe elektroaktivierte Wasser einen höheren gesamten ChlorGehalt aufweisen.

Das Endprodukt, also das elektroaktivierte Wasser, wird wie folgt auf seine keimreduzierende, keimabtötende Wirkung geprüft:
Eine Probe von elektroaktiviertem Wasser wird in einem zertifizierten Labor auf seine keimreduzierende, keimabtötende Wirkung gegenüber *Legionellen* gemäss einem standardisierten Verfahren getestet.

Zum Zeitpunkt der Hinterlegung der vorliegenden Patentanmeldung ist nicht bekannt, welcher aktive Stoff oder welches Gemisch von aktiven Stoffen für die keimreduzierende, keimabtötende Wirkung verantwortlich ist.

Die nachfolgenden Beispiele beweisen aber, dass das erfindungsgemäss hergestellte elektroaktiviertem Wasser eine keimreduzierende, keimabtötende Wirkung aufweist.

Das gemäss dem erfindungsgemässen Verfahren hergestellte elektroaktivierte Wasser weist bei einer Lagerung in einem geschlossenen Behältnis 9 bei einer Lagertemperatur von 15°C bis 25°C während wenigstens 3 Monaten eine keimreduzierende, keimabtötende Wirkung auf. Nach dieser Lagerzeit konnte kein Verlust an keimreduzierender, keimabtötender Wirkung festgestellt werden.

Die vorliegende Erfindung wird durch die nachfolgenden Beispiele illustriert.

### Beispiel 1 (Herstellung von elektroaktiviertem Wasser)

Im Uhrzeigersinn wurde folgender Kreislauf 7 aufgebaut:
Als Ionisations-Vorrichtung 2 wurde ein Flachreaktor mit herkömmlichem Aufbau verwendet.

Daran wurde eine Kontroll- und Steuerungs-Einheit 3 angeschlossen, welche ihrerseits mit einer Umwälzpumpe 4 verbunden wurde.

Ferner wurden im Kreislauf 7 eine Öffnung 5 für die Zugabe von Natriumchlorid-Lösung und eine Öffnung 6 für die Zugabe von gasförmigem Kohlenstoffdioxid installiert.

Der Kreislauf 7 hatte eine Öffnung 1 für die Zufuhr von Wasser und eine Öffnung 8 für den Ablass des elektroaktivierten Wassers.

Das elektroaktivierte Wasser wurde in ein Behältnis 9 abgefüllt.

Der Kreislauf 7 wurde an eine Trinkwasserleitung (Temperatur von 12°C und pH 7,2) angeschlossen und wurde mit Trinkwasser (10 1) aufgefüllt.

Anschliessend wurde die Umwälzpumpe 4 eingeschaltet.

In der Kontroll- und Steuerungs-Einheit 3 wurden folgende Soll-Werte eingestellt:
- Stromstärke: 6 Ampere;
- Spannung: 10 Volt DC;
- Durchflussgeschwindigkeit: 900 Liter/Stunde;
- pH-Wert: 6,3;
- Temperatur des Kreislauf-Wassers: 35°C; und
- Anzahl Durchgänge des Kreislauf-Wassers: 10 mal.

Basierend auf all diesen eingestellten SollWerten wurde von der Kontroll- und Steuerungs-Einheit 3 die benötigte Menge an gesättigter Natriumchlorid-Lösung und die benötigte Menge an gasförmigem Kohlenstoffdioxid automatisch zudosiert.

Nach zirka 7 Minuten wurde ein Absperr-Ventil automatisch geöffnet, und das erhaltene elektroaktivierte Wasser wurde kontinuierlich durch die Öffnung 8 in das Behältnis 9 mit einem Fassungsvermögen von 1'000 1 geführt.

Die abgeführte Menge an elektroaktiviertem Wasser wurde automatisch durch neues Trinkwasser ersetzt.

Dieser oben beschriebene Vorgang wurde solange fortgesetzt, bis die gewünschte Menge an elektroaktiviertem Wasser hergestellt war (1'000 1).

Ein in das Behältnis 9 eingelassener Niveaufühler schaltete beim Erreichen des Fassungsvermögens die gesamte Anlage automatisch aus.

Nach dem Auswechseln des vollen Behältnisses 9 durch ein neues Behältnis 9 wurde die gesamte Anlage erneut gestartet.

### Beispiel 2 (Wirksamkeits-Test des gemäss Beispiel 1 hergestellten elektroaktivierten Wassers innerhalb von 48 Stunden nach dessen Herstellung gegenüber Legionellen)

Für diesen Test wurden *Legionellen* (Stamm aus Referenz-Zentrum Bellinzona, Ansatz MCFarland 0.5) verwendet.

Als Positiv-Kontrolle wurden in ein erstes Behältnis 1 ml dieser *Legionellen* und 1 1 Trinkwasser hinzugegeben.

Als Wirksamkeits-Kontrolle wurden in ein zweites Behältnis 1 ml dieser *Legionellen,* 1 ml an elektroaktiviertem Wasser und 1 1 Trinkwasser hinzugegeben.

Beide Behältnisse wurden bei Raumtemperatur während 24 Stunden gelagert.

Im ersten Behältnis (Positiv-Kontrolle) wurden 142'000 KBE/ml nachgewiesen.

Im zweiten Behältnis (Wirksamkeits-Kontrolle) waren die *Legionellen* nicht mehr nachweisbar.

### Beispiel 3 (Wirksamkeits-Test des gemäss Beispiel 1 hergestellten elektroaktivierten Wassers nach 3-monatiger Lagerung bei Raumtemperatur gegenüber Legionellen)

Es wurde analog Beispiel 2 vorgegangen.

Im zweiten Behältnis (Wirksamkeits-Kontrolle) waren die *Legionellen* nicht mehr nachweisbar.

Daraus kann geschlossen werden, dass das elektroaktivierte Wasser 3 Monate nach seiner Herstellung und in einer Verdünnung von 1:1'000 immer noch gegenüber *Legionellen* wirksam ist.

### Beispiel 4 (Wirksamkeits-Test des gemäss Beispiel 1 hergestellten elektroaktivierten Wassers nach 4-monatiger Lagerung bei Raumtemperatur gegenüber Pseudomonas aeruginosa [ATCC-Stamm 27853, Ansatz MCFarland 0.5])

Als Positiv-Kontrolle wurden in ein erstes Behältnis 1 ml von *Pseudomonas aeruginosa* und 1 1 Trinkwasser hinzugegeben.

Als Wirksamkeits-Kontrolle wurden in ein zweites Behältnis 1 ml von *Pseudomonas aeruginosa,* 1 ml an elektroaktiviertem Wasser und 1 l Trinkwasser hinzugegeben.

Beide Behältnisse wurden bei Raumtemperatur während 1 Stunde gelagert.

Im ersten Behältnis (Positiv-Kontrolle) wurden 70'000 KBE/ml nachgewiesen.

Im zweiten Behältnis (Wirksamkeits-Kontrolle) waren die *Pseudomonas aeruginosa* nicht mehr nachweisbar.

Daraus kann geschlossen werden, dass das elektroaktivierte Wasser 4 Monate nach seiner Herstellung und in einer Verdünnung von 1:1'000 immer noch gegenüber *Pseudomonas aeruginosa* wirksam ist.

### Beispiel 5 (Wirksamkeits-Test des gemäss Beispiel 1 hergestellten elektroaktivierten Wassers gegenüber Legionellen, wobei das elektroaktivierte Wasser unmittelbar nach dessen Herstellung eingefroren, 1 Woche im gefrorenen Zustand gelagert und dann aufgetaut wurde)

Es wurde analog Beispiel 2 vorgegangen.

Im zweiten Behältnis (Wirksamkeits-Kontrolle) waren die *Legionellen* nicht mehr nachweisbar.

Daraus kann geschlossen werden, dass das elektroaktivierte Wasser, welches unmittelbar nach dessen Herstellung eingefroren, 1 Woche im gefrorenen Zustand gelagert und dann aufgetaut wurde, in einer Verdünnung von 1:1'000 immer noch gegenüber *Legionellen* wirksam ist.

### Beispiel 6 (Wirksamkeits-Test des gemäss Beispiel 1 hergestellten elektroaktivierten Wassers bei der Behandlung von Mauke)

Ein dunkelbrauner Hengst (Schweizer Warmblut, 18 Jahre alt) litt an Mauke am rechten Hinterbein. Die Haut war schuppig, verkrustet, teilweise wund und verdickt im Bereich von Fesselbeuge bis Mitte Röhre.

Dieses Pferd wurde mit herkömmlicher Therapie wie folgt behandelt: Waschung, Rasur, Salbenverbände, Cortison lokal und parenteral.

Zeitweise stellten sich Erfolge ein, jedoch gab es kurzfristig trotz intensiver Therapie während beinahe 2 Jahren immer wieder Rückschläge.

Bei diesem Pferd wurde im Alter von 20 Jahren die oben beschriebene herkömmliche Therapie abgesetzt.

Stattdessen wurde dieses Pferd erstmals mit dem gemäss Beispiel 1 hergestellten elektroaktivierten Wasser wie folgt behandelt:
Die lädierten Hautstellen wurden mit dem elektroaktivierten Wasser besprüht, und die Flüssigkeit wurde danach durch die Haare hindurch in die Haut einmassiert. Diese Behandlung wurde täglich morgens und abends während 2 Monaten vorgenommen. Anschliessend wurde diese Behandlung nur noch abends ausgeführt.

Bereits 2 Wochen nach Beginn der Behandlung waren erste Anzeichen einer Besserung erkennbar und nach einer weiteren Woche deutlich sichtbar.

Die Haut erholte sich so gut, dass die Behandlungsfrequenz nach 2 Monaten auf 1-mal täglich reduziert werden konnte.

Die Krusten, die wunden Stellen und die sekundäre ödematöse Verdickung des Beines waren verschwunden. Es blieb noch eine leichtgradige Schuppung der Haut zurück.

In der vorliegenden Erfindung werden folgende Bezugszeichen verwendet:
1 Öffnung für die Zufuhr von Wasser
2 lonisations-Vorrichtung
3 Kontroll- und Steuerungs-Einheit
4 Umwälzpumpe
5 Öffnung für die Zugabe von Natriumchlorid-Lösung
6 Öffnung für die Zugabe von gasförmigem Kohlenstoffdioxid
7 Kreislauf
8 Öffnung für den Ablass des elektroaktivierten Wassers
9 Behältnis.

## Patentansprüche

1. Verfahren zur Herstellung von elektroaktiviertem Wasser, welches in einem geschlossenen Behältnis (9) bei einer Lagertemperatur von 15°C bis 25°C während wenigstens 3 Monaten eine keimreduzierende, keimabtötende Wirkung aufweist,
**dadurch gekennzeichnet, dass** man
Wasser in einem geschlossenen Kreislauf (7) mehrmals durch eine Ionisations-Vorrichtung (2) pumpt,
wobei dem Kreislauf-Wasser in beliebiger Reihenfolge eine Natriumchlorid-Lösung und gasförmiges Kohlenstoffdioxid zudosiert werden,
wobei eine Kontroll- und Steuerungs-Einheit (3)
- die Stromstärke und
- die Spannung
in der genannten Ionisations-Vorrichtung (2)
sowie
- die Durchflussgeschwindigkeit und
- die Zugabe der Menge der Natriumchlorid-Lösung und der Menge des gasförmigen Kohlenstoffdioxids
bezüglich vorbestimmter Werte kontrolliert und steuert, und dass man anschliessend
das so erhaltene Produkt, also das elektroaktivierte Wasser, entweder in ein Behältnis (9) abfüllt und verschliesst oder direkt verwendet.

2. Verfahren nach Anspruch 1, **dadurch gekennzeichnet, dass** das Verfahren unter Überdruck ausgeführt wird, beispielsweise ein Überdruck von 0,5 bar bis zu einem Maximum von 8 bar, insbesondere ein Überdruck von 1 bar bis 3 bar.

3. Verfahren nach einem der Ansprüche 1 bis 2, **dadurch gekennzeichnet, dass** der pH-Wert im geschlossenen Kreislauf des Wassers einen Wert von kleiner als 7 hat, insbesondere ein pH-Wert von 6,5 bis 3.

4. Verfahren nach einem der Ansprüche 1 bis 3, **dadurch gekennzeichnet, dass** das Verfahren entweder im kontinuierlichen oder im chargenweisen Betrieb durchgeführt wird.

5. Verfahren nach einem der Ansprüche 1 bis 4, **dadurch gekennzeichnet, dass** das als Ausgangsmaterial verwendete Wasser Trinkwasserqualität aufweist.

6. Verfahren nach einem der Ansprüche 1 bis 5, **dadurch gekennzeichnet, dass** die abzutötenden Keime Le*gionellen* und/oder *E. coli* und/oder *Pseudomonas* sind.

7. Verfahren nach einem der Ansprüche 1 bis 6, **dadurch gekennzeichnet, dass** das Kreislauf-Wasser 2 bis 30 mal, insbesondere 5 bis 15 mal, durch den geschlossenen Kreislauf in der Ionisations-Vorrichtung (2) gepumpt wird.

8. Verfahren nach einem der Ansprüche 1 bis 7, **dadurch gekennzeichnet, dass** die Natriumchlorid-Lösung eine gesättigte Lösung oder eine nahezu gesättigte Lösung ist.

9. Verfahren nach einem der Ansprüche 1 bis 8, **dadurch gekennzeichnet, dass** in der Ionisations-Vorrichtung (2)
- die Stromstärke von 1 bis 12 Ampere,
- die Spannung von 5 bis 50 Volt DC, und
- die Durchflussgeschwindigkeit von 100 bis 1'000 Liter/Stunde
betragen.

10. Verfahren nach einem der Ansprüche 1 bis 9, **dadurch gekennzeichnet, dass** der Chlorid-Wert im Kreislauf-Wasser von 200 mg/l bis 20'000 mg/l, vorzugsweise von 1'000 mg/l bis 2'000 mg/l, beträgt.

11. Verfahren nach einem der Ansprüche 1 bis 10, **dadurch gekennzeichnet, dass** das Kreislauf-Wasser eine Temperatur von 15°C bis 60°C, insbesondere von 25°C bis 40°C, vorzugsweise Raumtemperatur, aufweist.

12. Elektroaktiviertes Wasser, welches in einem geschlossenen Behältnis (9) bei einer Lagertemperatur von 15°C bis 25°C während wenigstens 3 Monaten eine keimreduzierende, keimabtötende Wirkung aufweist,
dadurch erhältlich, dass man
Wasser in einem geschlossenen Kreislauf (7) mehrmals durch eine Ionisations-Vorrichtung (2) pumpt,
wobei dem Kreislauf-Wasser in beliebiger Reihenfolge eine Natriumchlorid-Lösung und gasförmiges Kohlenstoffdioxid zudosiert werden,
wobei eine Kontroll- und Steuerungs-Einheit (3)
- die Stromstärke und
- die Spannung
in der genannten Ionisations-Vorrichtung (2)
sowie
- die Durchflussgeschwindigkeit und
- die Zugabe der Menge der Natriumchlorid-Lösung und der Menge des gasförmigen Kohlenstoffdioxids
bezüglich vorbestimmter Werte kontrolliert und steuert, und dass man anschliessend
das so erhaltene Produkt, also das elektroaktivierte Wasser, entweder in ein Behältnis (9) abfüllt und verschliesst oder direkt verwendet.

13. Elektroaktiviertes Wasser nach Anspruch 12, dadurch erhältlich, dass man das Verfahren nach einem der Ansprüche 2 bis 11 durchführt.

14. Nicht-therapeutische Verwendung des gemäss dem Verfahren nach einem der Ansprüche 1 bis 11 hergestellten elektroaktivierten Wassers
- als Agens zur Entkeimung von Trinkwasser, insbesondere von Warmwasser, oder
- als Agens zur Entkeimung von Prozesswasser, oder
- als Agens zur Entkeimung von Wasser für Schwimmbäder, oder
- als Agens zur Desinfektion von Oberflächen, beispielsweise von Nasszellen, wie Douchen oder Umgebungen von Hallenbädern, oder
- als Agens zur Entkeimung von Kühltürmen, insbesondere Kühltürme mit einem offenen Kreislauf, oder
- als Agens zur Entkeimung von wasserlöslichen Farben, oder
- als Agens zur Entkeimung von sanitären Anlagen, beispielsweise Lavabos, Badewannen, Toiletten, oder
- als Agens zur Entkeimung von Waschanlagen, beispielsweise Waschanlagen zum Waschen und Reinigen von Wäsche, Geschirr oder Fahrzeugen.

15. Dermatologisches Präparat, beispielsweise ein Präparat zur Behandlung von Ekzemen, wie etwa Mauke, **dadurch gekennzeichnet, dass** es als aktive Wirkstoffkomponente elektroaktiviertes Wasser enthält, welches ge-mäss dem Verfahren nach einem der Ansprüche 1 bis 11 hergestellt worden ist.

## Claims

1. A process for the preparation of electro activated water having in a sealed container (9) at a storage temperature from 15°C to 25°C during at least 3 months a microbes reducing, microbes killing activity,
**characterized in that**
in a closed circuit (7) water is pumped repeatedly through an ionization device (2),
whereby to the circuit water is added in any sequence a sodium chloride solution and gaseous carbon dioxide,
whereby a control and regulation unit (3) controls and regulates with regard to predetermined values
- the current and
- the voltage
in said ionization device (2)
as well as
- the flow rate and
- the addition of the amount of sodium chloride solution and the amount of gaseous carbon dioxide, and that afterwards
the so obtained product, that is the electro activated water, is either filled into a container (9) and is sealed or is used immediately.

2. The process according to claim 1, **characterized in that** the process is performed under excess pressure, for example an excess pressure from 0.5 bar up to a maximum of 8 bar, especially an excess pressure from 1 bar to 3 bar.

3. The process according to one of claims 1 to 2, **characterized in that** the pH value in the closed circuit (7) of the water has a value of less than 7, especially a pH value from 6.5 to 3.

4. The process according to one of claims 1 to 3, **characterized in that** the process is performed either in a continuous or batchwise mode.

5. The process according to one of claims 1 to 4, **characterized in that** the water used as starting material has drinking water quality.

6. The process according to one of claims 1 to 5, **characterized in that** the microbes to be killed are *Legionellas* and/or *E. coli* and/or *Pseudomonas.*

7. The process according to one of claims 1 to 6, **characterized in that** the circuit water is pumped 2 to 30 times, especially 5 to 15 times, through the closed circuit in the ionization device (2).

8. The process according to one of claims 1 to 7, **characterized in that** the sodium chloride solution is a saturated solution or a nearly saturated solution.

9. The process according to one of claims 1 to 8, **characterized in that** in the ionization device (2)
- the current is from 1 to 12 ampere,
- the voltage is from 5 to 50 volt DC, and
- the flow rate is from 100 to 1'000 liters/hour.

10. The process according to one of claims 1 to 9, **characterized in that** chloride value in the circuit water is from 200 mg/l to 20'000 mg/l, preferably from 1'000 mg/l to 2'000 mg/l.

11. The process according to one of claims 1 to 10, **characterized in that** the circuit water has a temperature from 15°C to 60°C, especially from 25°C to 40°C, preferably room temperature.

12. Electro activated water having in a sealed container (9) at a storage temperature from 15°C to 25°C during at least 3 months a microbes reducing, microbes killing activity,
obtainable in that
in a closed circuit (7) water is pumped repeatedly through an ionization device (2),
whereby to the circuit water is added in any sequence a sodium chloride solution and gaseous carbon dioxide,
whereby a control and regulation unit (3) controls and regulates with regard to predetermined values
- the current and
- the voltage
in said ionization device (2)
as well as
- the flow rate and
- the addition of the amount of sodium chloride solution and the amount of gaseous carbon dioxide, and that afterwards
the so obtained product, that is the electro activated water, is either filled into a container (9) and is sealed or is used immediately.

13. Electro activated water according to claim 12, obtainable in that the process according to one of claims 2 to 11 is performed.

14. Non-therapeutic use of the electro activated water prepared according to the process according to one of claims 1 to 11
- as agent for the disinfection of drinking water, especially of warm water, or
- as agent for the disinfection of process water, or
- as agent for the disinfection of water for swimming pools, or
- as agent for the disinfection of surfaces, for example of plumbing cells, such as douches or surroundings of indoor swimming pools, or
- as agent for the disinfection of cooling towers, especially of cooling towers having an open circuit, or
- as agent for the disinfection of water soluble paints, or
- as agent for the disinfection of sanitation, for example sinks, bathtubs, toilets, or
- as agent for the disinfection of washing installations, for example washing installations for washing and cleaning of laundry, tableware or vehicles.

15. Dermatological preparation, for example a preparation for the treatment of eczemas, such as mallenders, **characterized in that** it contains as active component electro activated water that is prepared according to the process according to one of claims 1 to 11.

## Revendications

1. Procédé pour la préparation d'eau électro-activée qui présente un effet germicide réducteur de germes pendant au moins 3 mois dans un récipient fermé (9) à une température de stockage de 15 °C à 25 °C, **caractérisé en ce qu'**on pompe plusieurs fois l'eau dans un circuit fermé (7) à travers un dispositif d'ionisation (2), une solution de chlorure de sodium et du dioxyde de carbone gazeux étant ajoutés dans n'importe quel ordre à l'eau du circuit, une unité de contrôle et de commande (3) contrôlant et commandant par rapport à des valeurs prédéterminées :
- l'intensité du courant et
- la tension
dans le dispositif d'ionisation (2) susmentionné ainsi que
- la vitesse d'écoulement et
- l'ajout de la quantité de solution de chlorure de sodium ainsi que de la quantité de dioxyde de carbone gazeux, et **caractérisé en ce que**, ensuite, le produit ainsi obtenu, à savoir l'eau électro-activée, est soit versé dans un récipient (9) fermé hermétiquement, soit utilisé directement.

2. Procédé selon la revendication 1, **caractérisé en ce que** le procédé est effectué en surpression, par exemple à une surpression de 0,5 bar jusqu'à 8 bar maximum, en particulier à une surpression de 1 bar à 3 bar.

3. Procédé selon l'une quelconque des revendications 1 à 2, **caractérisé en ce que** la valeur de pH dans le circuit fermé de l'eau est une valeur inférieure à 7, en particulier une valeur de pH allant de 6,5 à 3.

4. Procédé selon l'une quelconque des revendications 1 à 3, **caractérisé en ce que** le procédé est réalisé soit en mode continu, soit en mode discontinu.

5. Procédé selon l'une quelconque des revendications 1 à 4, **caractérisé en ce que** l'eau utilisée comme substance de départ est potable.

6. Procédé selon l'une quelconque des revendications 1 à 5, **caractérisé en ce que** les germes à tuer sont *Legionella* et/ou *E*. *coli* et/ou *Pseudomonas.*

7. Procédé selon l'une quelconque des revendications 1 à 6, **caractérisé en ce que** l'eau du circuit est pompée 2 à 30 fois, en particulier 5 à 15 fois, à travers le circuit fermé dans le dispositif d'ionisation (2).

8. Procédé selon l'une quelconque des revendications 1 à 7, **caractérisé en ce que** la solution de chlorure de sodium est une solution saturée ou une solution pratiquement saturée.

9. Procédé selon l'une quelconque des revendications 1 à 8, **caractérisé en ce que**, dans le dispositif d'ionisation (2),
- l'intensité du courant est de 1 à 12 ampères,
- la tension est de 5 à 50 volts en CC, et
- la vitesse d'écoulement est de 100 à 1000 litres/heure.

10. Procédé selon l'une quelconque des revendications 1 à 9, **caractérisé en ce que** la teneur en chlorure dans l'eau du circuit est de 200 mg/l à 20 000 mg/l, de préférence de 1000 mg/l à 2000 mg/l.

11. Procédé selon l'une quelconque des revendications 1 à 10, **caractérisé en ce que** l'eau du circuit présente une température de 15 °C à 60 °C, en particulier de 25 °C à 40 °C, de préférence la température ambiante.

12. Eau électro-activée qui présente un effet germicide réducteur de germes pendant au moins 3 mois dans un récipient fermé (9) à une température de stockage de 15 °C à 25 °C, pouvant être obtenue en pompant plusieurs fois l'eau dans un circuit fermé (7) à travers un dispositif d'ionisation (2), une solution de chlorure de sodium et du dioxyde de carbone gazeux étant ajoutés dans n'importe quel ordre à l'eau du circuit, une unité de contrôle et de commande (3) contrôlant et commandant par rapport à des valeurs prédéterminées :
- l'intensité du courant et
- la tension
dans le dispositif d'ionisation (2) susmentionné ainsi que
- la vitesse d'écoulement et
- l'ajout de la quantité de solution de chlorure de sodium ainsi que de la quantité de dioxyde de carbone gazeux, et **caractérisée en ce que**, ensuite, le produit ainsi obtenu, à savoir l'eau électro-activée, est soit versé dans un récipient (9) fermé hermétiquement, soit utilisé directement.

13. Eau électro-activée selon la revendication 12, pouvant être obtenue en réalisant le procédé selon l'une quelconque des revendications 2 à 11.

14. Utilisation à titre non thérapeutique de l'eau électro-activée préparée suivant le procédé selon l'une quelconque des revendications 1 à 11 en tant que :
- agent pour la désinfection de l'eau potable, en particulier de l'eau chaude, ou
- agent pour la désinfection de l'eau de procédé, ou
- agent pour la désinfection de l'eau de piscine, ou
- agent pour la désinfection des surfaces, par exemple des pièces humides comme les douches ou les abords des piscines couvertes, ou
- agent pour la désinfection des tours de refroidissement, en particulier des tours de refroidissement équipées d'un circuit ouvert, ou
- agent pour la désinfection des peintures solubles dans l'eau, ou
- agent pour la désinfection des installations sanitaires, par exemple des lavabos, des baignoires, des toilettes, ou
- agent pour la désinfection des installations de lavage, par exemple des installations de lavage destinées à laver et à nettoyer le linge, la vaisselle ou les véhicules.

15. Préparation dermatologique, par exemple préparation pour traiter l'eczéma, par exemple l'eczéma du paturon, **caractérisée en ce qu'**elle contient de l'eau électro-activée comme principe actif, qui est préparée suivant le procédé selon l'une quelconque des revendications 1 à 11.
